# EUROPEAN PATENT SPECIFICATION

(11) **EP 1 622 342 B1**
(45) Date of publication and mention of the grant of the patent: **27.08.2008**
(21) Application number: 05016282.5
(22) Date of filing: 27.07.2005
(51) Int. Cl.: H04M 1/02

(54) **Swing hinge apparatus and portable terminal with the same**
Scharniergelenk und tragbares Endgerät damit
Dispositif à charnière pivotante, et terminal portable avec un tel dispositif

(30) Priority: 27.07.2004 KR 2004058750; 18.11.2004 KR 2004094645
(43) Date of publication of application: 01.02.2006
(73) Proprietor: SAMSUNG ELECTRONICS CO., LTD., Suwon-si, Gyeonggi-do (KR)
(72) Inventor: Ryu, Gwan-Woo, Yeongtong-gu,Suwon-si, Gyeonggi-do (KR); Bae, Jong-Gun, Yeongtong-gu,Suwon-si, Gyeonggi-do (KR)
(74) Representative: Lang, Johannes

(56) References cited:
- EP-A- 1 353 488
- EP-A- 1 427 172
- EP-A- 1 427 174
- WO-A-01/77786
- WO-A-03/075475
- WO-A-20/04049150
- US-A1- 2001 048 589
- US-A1- 2003 087 609

## Description

### BACKGROUND OF THE INVENTION

### Field of the Invention

The present invention relates to a portable terminal. More particularly, the present invention relates to a portable terminal including a swing hinge apparatus which rotatably couples a pair of opposing housings to each other.

### Description of the Related Art

In general, "portable terminals" refer to a communication appliance which a user can carry with him/her to perform wireless communications with a desired partner. A current tendency for such portable terminals is to provide multimedia terminals capable of performing more functions while making the terminals smaller, lighter and sleeker, while improving portability. In particular, future portable terminals will be capable of performing more functions for a variety of purposes, while the size is minimized. Future portable terminals also will be modified so as to be adapted to diverse multimedia and internet environments. At present, portable terminals are an electronic device commonly used without distinction of age or sex, and are tending to be regarded as a necessity that people rely on and therefore always carry with them.

According to their appearance, portable terminals may be classified into bar-type terminals, flip-type terminals and folder-type terminals. The bar-type terminal has a single housing provided with input devices such as a keypad and a transmitter module and output devices such as a display device, a receiver module, and an antenna device. The flip-type terminal has a flip cover mounted to a bar-type housing to prevent erroneous operation of a keypad. The folder-type terminal has two housings foldably coupled to each other, in which input and output devices are properly distributed and disposed. Those skilled in the art are familiar with the above-mentioned classification of portable terminals.

As portable terminals have been widely used, the users have come to desire various functions and designs of portable terminals. According to such a desire of the users, new types of portable terminals have appeared, such as sliding-type terminals which have a pair of opposing housings coupled to each other. Thus, the housings can be linearly moved relative to each other. Additionally, rotary-type terminals having a pair of housings coupled to each other so that any one housing can be turned upside down, and swing-type terminals having a pair of opposing housings rotatably coupled to each other have also appeared. EP-A-1 353 488 discloses a foldable and portable mobile communication terminal which uses a swing hinge apparatus to couple a pair of housings and to allow their rotation around two vertical axis.

Although various types of terminals have appeared to diversify operting/closing operations of the terminals, typical users of the terminals are not conscious of particular changes in the terminal's function and usage. Moreover, in spite of the fact that the terminals can be more conveniently and diversely configured functions such as games, chatting and the like have led to larger display devices on the terminals. Thus the terminals also become somewhat larger due to increased multimedia service functions, and practical means to implement these functions are still insufficient.

Accordingly, there is a ongoing need for portable terminals having swing hinge apparatuses that rotatably couple a pair of opposing housings to each other for minimizing overall size of the terminal, while simultaneously increasing functionality.

### SUMMARY OF THE INVENTION

This object is solved by the invention as claimed in claim 1; embodiments of the invention are defined in the dependent claims.

It is an object of the present invention to provide a swing hinge apparatus, which is compact and can securely package a multitude of parts while still realizing semi-automatic opening/closing operations.

The invention provides a swing hinge apparatus for a portable terminal in accordance with one aspect of the present invention, the apparatus including a hinge base, a hinge housing being coupled with the hinge base to rotate about a first hinge axis and being provided with a resilient force acting in one direction. Additionally, a bracket assembly is coupled to the hinge housing and rotates about a second hinge axis which extends perpendicularly to the first hinge axis. Lastly, a locker is disposed on the hinge base to restrict the rotation of the hinge housing in a first position.

Other objects, advantages, and salient features of the invention will become apparent to those skilled in the art from the following detailed description, which, taken in conjunction with the annexed drawings, discloses preferred embodiments of the invention.

### BRIEF DESCRIPTION OF THE DRAWINGS

The above and other objects, and features, and advantages of certain embodiments of the present invention will be more apparent from the following description taken in conjunction with the accompanying drawings, in which:
FIG. 1 is an exploded perspective view of a swing hinge apparatus for a portable terminal in accordance with an embodiment of the present invention;
FIG. 2 is a front view of the swing hinge apparatus shown in FIG. 1 when assembled;
FIG. 3 is a side view of the swing hinge apparatus shown in FIG. 1 when assembled;
FIG. 4 is a perspective view of the swing hinge apparatus shown in FIG. 1 when assembled;
FIGS. 5 and 6 are exemplary views illustrating rotation of a hinge housing of the swing hinge apparatus shown in FIG. 4, respectively;
FIGS. 7 and 8 are exemplary views illustrating rotation of a bracket assembly of the swing hinge apparatus shown in FIG. 6, respectively;
FIGS. 9 and 10 are exemplary views illustrating coupling of the swing hinge apparatus shown in FIG. 1 to a portable terminal, respectively;
FIG. 11 is a perspective view of the portable terminal having the swing hinge apparatus shown in FIG. 1;
FIG. 12 is a perspective view illustrating rotation of a second housing of the portable terminal shown in FIG. 11;
FIG. 13 is a perspective view illustrating a final state in which the second housing of the portable terminal shown in FIG. 11 rotates completely;
FIG. 14 is an exploded perspective view of a swing hinge apparatus for a portable terminal in accordance with another embodiment of the present invention;
FIG. 15 is a partially broken side view of the swing hinge apparatus shown in FIG. 14; and
FIG. 16 is a partially broken side view illustrating a state in which a bracket assembly of the swing hinge apparatus shown in FIG. 14 rotates completely.

Throughout the drawings, the same drawing reference numerals will be understood to refer to the same elements, features, and structures.

### DETAILED DESCRIPTION OF EXEMPLARY EMBODIMENTS

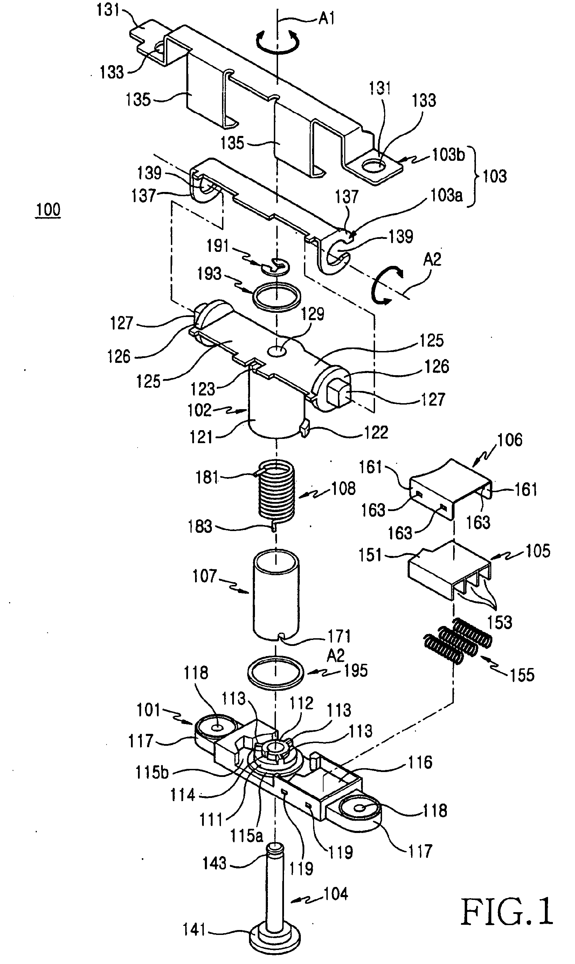

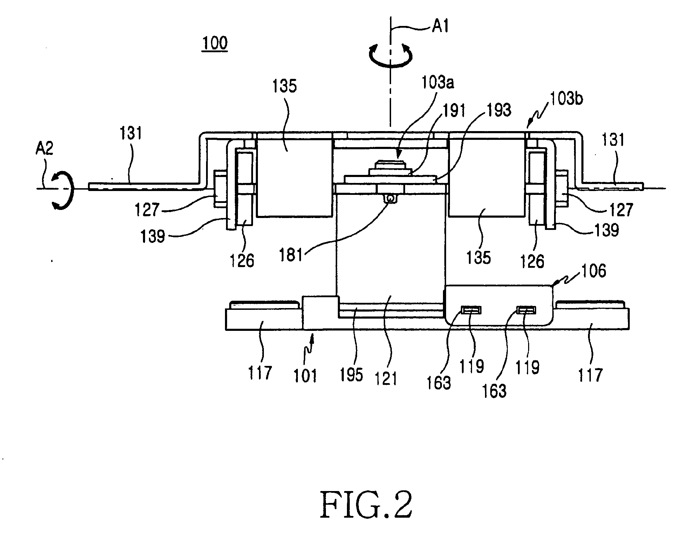

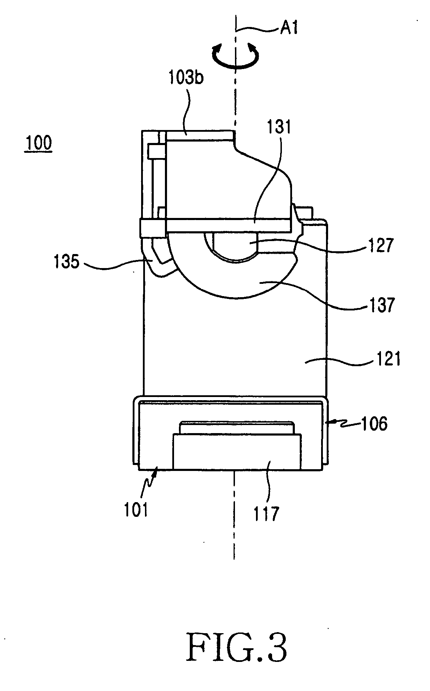

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness.
As shown in FIGS. 1-4, a swing hinge apparatus 100 for a portable terminal in accordance with an embodiment of the present invention comprises a hinge base 101, a hinge housing 102, a bracket assembly 103 and a locker 105. The swing hinge apparatus 100 is configured to rotatably couple a pair of opposing housings of a swing-type portable terminal to each other.

The hinge base 101 preferably has a substantially plate-like shape extending in one direction, and is formed on one surface with supports 111, 112 and a locker-receiving portion 116. The hinge base 101 also includes a pair of first fastening pieces 117 which extend outwardly from outer circumferential surfaces of both end portions. The supports 111, 112 extend along a first hinge axis A1 which in turn extend perpendicularly to the plane of the hinge base 101.

The supports 111, 112 comprise the first support 111 for supporting rotation of the hinge housing 102 to engage an inner circumferential surface of the hinge housing 102 and the second support 112 to engage an inner circumferential surface of a bushing 107 which is inserted into the hinge housing 102. The first support 111 preferably extends upwardly from one surface of the hinge base 101 and the second support 112 extends upwardly from an upper surface of the first support 111. The supports 111, 112 have at least one supporting protrusion 113 extending diametrically from an outer circumferential surface of the second support 112 and located on the upper surface of the first support 111. The supports 111, 112, in particular, the first support 111 is formed along its circumference with a rotating surface 115a, and a guide groove 115b is formed around the rotating surface 115a to surround an edge of the rotating surface 115a. The rotating surface 115a is formed so that it surrounds the whole circumference of the first support 111, while the guide groove 115b is formed over only a limited angular range. In this embodiment, the guide groove 115b is formed so that it may restrict the range of rotation of the hinge housing 102 within about 180 degrees.

The locker-receiving portion 116 is constructed as a recess formed on one side of the supports 111, 112, and fastening protrusions 119 are formed on outer circumferential surfaces on both sides of the locker-receiving portion 116. The recess constitutes the locker-receiving portion 116 and has a side surface which is open toward the supports 111, 112. Thus, the locker 105 received in the locker-receiving portion 116 may extend into and out of the open side surface.

Each of the first fastening pieces 117 is provided with a first fastening hole 118 penetrated in a direction parallel to the first hinge axis A1. This arrangement permits fixing of the hinge housing 101 to any one housing of the portable terminal.

The hinge housing 102 comprises a cylindrical body 121 and a pair of supporting pieces 125. The supporting pieces 125 extend in opposite directions from an outer circumferential surface of one end of the cylindrical body 121, respectively. The hinge housing 102 is coupled to the hinge base 101 and rotates around the first hinge axis A1. The hinge housing 102 also includes an aperture 129 for receiving hinge shaft 104.

The other end of the cylindrical body 121 is formed on its outer circumferential surface with a stopper protrusion 122. The other end surface of the cylindrical body 121 is positioned opposite to the rotating surface 115a of the hinge base 101, and if the hinge housing 102 rotates, the stopper protrusion 122 moves within the guide groove 115b. As the stopper protrusion 122 moves within the guide groove 115b, the range of rotation of the hinge housing 102 is restricted by the stopper protrusion 122 and the guide groove 115b. It is apparent to one of ordinary skill that an angular range of the guide groove 115b is larger than about 180 degrees by an amount roughly equal to a space occupied by the stopper groove 122 in order to restrict the range of rotation of the hinge housing 102 within about 180 degrees. A washer 195 may be interposed between the other end surface of the cylindrical body 121 and the rotating surface 115a. The washer 195 interposed between the other end surface of the cylindrical body 121 and the rotating surface 115a relieves friction and abrasion caused by rotation of the hinge housing 102 and also preferably hermetically seals the hinge housing 102.

The bushing 107 and a coil spring 108 are mounted within the hinge housing 102. The inside of the hinge housing 102 is filled with lubricant material such as grease. The coil spring 108 provides a resilient force which acts to rotate the hinge housing 102 in one direction. The coil spring has first and second ends 181, 183. To provide the resilient force to the hinge housing 102, one end of the cylindrical body 121 of the hinge housing 102 is formed with a first spring groove 123 and the outer circumferential surface of the second support 112 is formed with a second spring groove 114. Both ends 181, 183 of the coil spring 108 are supported in the first and second spring grooves 123, 114 to provide the resilient force to the hinge housing 102.

The lubricant material filled within the hinge housing 102 facilitates rotation of the hinge housing 102 by the resilient force of the coil spring 108. The bushing 107 is provided to maximize lubrication by the lubricant material. The bushing 107 is formed at its lower end with supporting grooves 171 to engage with the supporting protrusions 113 of the hinge base 101 and is fixed to the hinge base 101 by engaging the supporting grooves 171 with the supporting protrusions 113.

The pair of supporting pieces 125 extend in a direction perpendicular to the first hinge axis A1, respectively, and are swivelled about the first hinge axis A1 as the hinge housing 102 rotates. Both ends of the supporting pieces 125 are formed with opposite supporting ribs 126, respectively. Rotating protrusions 127 are formed on the supporting ribs 126. The supporting ribs and the rotating protrusions 127 formed at both ends of the supporting pieces 125 rotatably couple the bracket assembly 103 to the hinge housing 102.

The swing hinge apparatus 100 also include a hinge shaft 104 for rotatably coupling the hinge housing 102 to the hinge base 101. The hinge shaft 104 has a supporting plate 141 at one end and is formed on an outer circumferential surface of its other end with a fastening groove 143. The hinge shaft 104 passes through the hinge base 101 and the hinge housing 102. The hinge shaft 104 protrudes from the other end of the hinge housing 102 through aperture 129 while being supported against the other surface of the hinge base 101. After the hinge shaft 104 protrudes from the other end of the hinge housing 102, an E-ring 191 is fitted into the fastening groove 143, so that the hinge shaft 104 is fixed to the hinge base 101. Thus, the hinge shaft 104 is rotatably coupled to the hinge housing 102. Depending on the embodiment, the hinge shaft 104 may be rotatably coupled to the hinge base 101 and fixed to the hinge housing 102, or may be rotatably coupled to the hinge base 101 and the hinge housing 102. A washer 193 is preferably interposed between the E-ring 191 and the other surface of the hinge housing 102 to relieve friction and abrasion between the E-ring 191 and the hinge housing 102.

The bracket assembly 103 is coupled to the hinge housing 102, in particular, to the supporting pieces 125, and rotates about a second hinge axis A2 extending perpendicularly to the first hinge axis A1. The bracket assembly 103 comprises a first bracket 103a rotatably coupled to the supporting pieces 125 and a second bracket 103b fixed to the first bracket 103a. The second bracket 103b is also fixed to the other housing of the portable terminal.

The first bracket 103a extends in a direction of the second hinge axis A2 and faces the supporting pieces 125. Both ends of the first bracket 103a curve in the same direction to oppose one another and thus form rotating ribs 137 encompassing outer surfaces of the supporting ribs 126. The rotating ribs 137 are formed with rotating holes 139 extending in the direction of the second hinge axis A2 to rotatably couple with the rotating protrusions 127. Consequently, the first bracket 103 is rotatably coupled to the supporting pieces 125.

The second bracket 103b is fixed to the first bracket 103a. Preferably, the bracket is fixed by laser welding or any other suitable method, and is formed on both ends with second fastening pieces 131 for connection to the portable terminal. The second fastening pieces 131 are provided with second fastening holes 133, so that they can be fastened to the portable terminal by a fastener such as a conventional screw.

The second bracket 103b is formed on one side edge with at least a hook 135 extending in a direction of the first hinge axis A1. An end of the hook is curved to surround the supporting pieces 125. When the bracket assembly 103 rotates about the second hinge axis A2, the hook 135 contacts the supporting pieces 125 to restrict rotation of the bracket assembly 103. In this embodiment, a range of rotation of the bracket assembly 103 is restricted within about 15 degrees. However, the range of rotation of the bracket assembly 103 is determined by the length along which the hook 135 extends in the direction of the first hinge axis A1 and the angle in which the end of the hook 135 is bent. The range of rotation is preferably determined by balancing comfort for the user and structural stability of the terminal.

The locker 105 is mounted in the locker-receiving portion 116 of the hinge base 101 so that it may move horizontally. The locker 105 is formed at one end with a locking protrusion 151 which moves toward or away from the supports 111, 112. As the locking protrusion 151 moves toward or away from the supports 111, 112, it interferes with the guide groove 115b. A bottom surface of the locker 105 is formed with a plurality of spring grooves 153, and at least one compression spring 155 is received within the spring grooves 153. The compression spring 155 is supported at one end against an inner wall of the locker-receiving portion 116 and is supported at its other end against a closed end of the spring groove 153 to provide a resilient force urging the locking protrusion 151 toward the supports 111, 112.

The locker-receiving portion 116, with the locker 105 and the compression spring 155 provided therein, is closed by a cover 106. Both side edges 161 of the cover 106 are bent to encompass both side surfaces of the locker-receiving portion 116 and are formed with fixing holes 163 which correspond to the fastening protrusions 119. The fastening protrusions 119 are fitted into fixing holes 163 to fix the cover 106 on the locker-receiving portion 116.

The locking protrusion 151 is located adjacent to one end of the guide groove 115b. As a result of this, when one side surface of the stopper protrusion 122 of the hinge housing 102 is positioned adjacent to the one end of the guide groove 115b, the locking protrusion 151 is engaged with the other side surface of the stopper protrusion 122 to restrict rotation of the hinge housing 102.

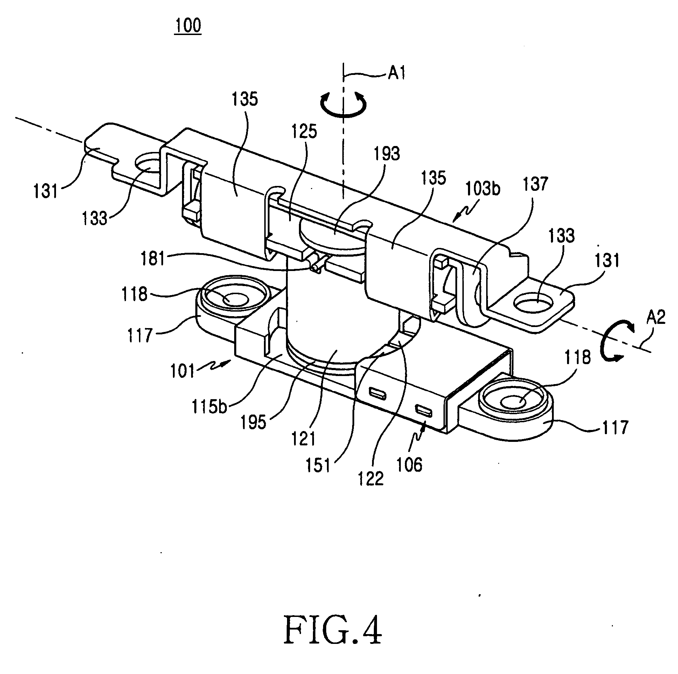

As shown in FIG. 4, the rotation of the hinge housing 102 is restricted in a first position in which the stopper protrusion 122 is located at the one end of the guide groove 115b to engage with the locking protrusion 151. At this time, the resilient force which accumulates in the coil spring 108 received within the hinge housing 102 is maintained to the maximum extent within the range of rotation of the hinge housing 102.

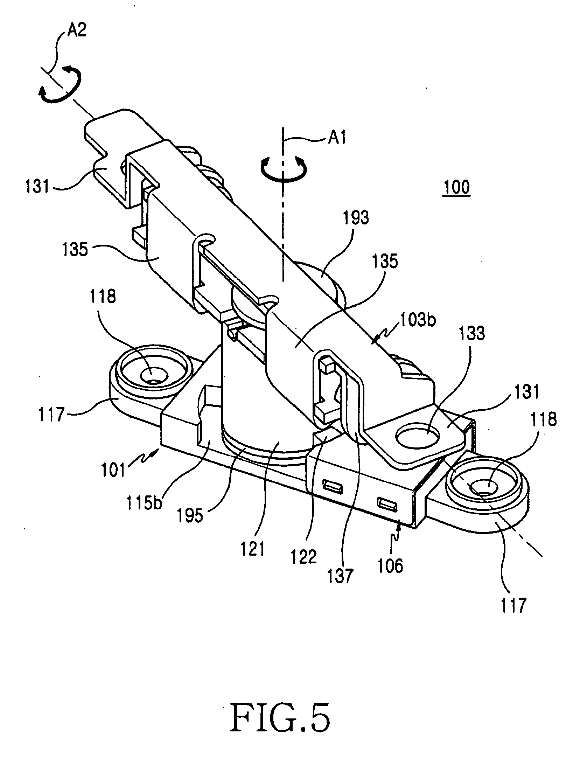

A mechanism for releasing the locking condition between the stopper protrusion 122 and the locking protrusion 151 is not separately provided, but the locking condition between the stopper protrusion 122 and the locking protrusion 151 is released by exerting an external force to rotate the hinge housing 102 about the first hinge axis A1. Referring to FIG. 5, upon the rotation of the hinge housing 102 by the external force, the stopper protrusion 122 pushes the locking protrusion 151 outwardly and rotates. That is, the locker 105 retreats into the locker-receiving portion 116. If the stopper protrusion 122 rotates past the locking protrusion 151, the locking condition is released.

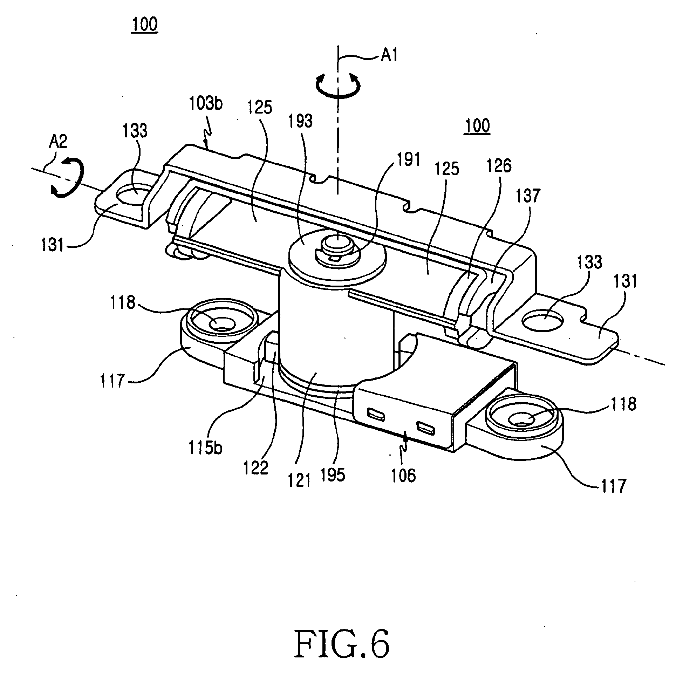

When the locking condition between the stopper protrusion 122 and the locking protrusion 151 is released completely, the hinge housing 102 continues to rotate without exerting an additional external force. This is possible due to the resilient force of the coil spring 108 received within the hinge housing 102. Therefore, as shown in FIG. 6, the hinge housing 102 rotates due to the resilient force of the coil spring 108 to a second position in which the stopper protrusion 122 comes into contact with the other end of the guide groove 115b. At this time, the lubricant material filled within the hinge housing 102 prevents abrupt rotation of the hinge housing 102.

Consequently, the hinge housing 102 rotates from the first position, in which the stopper protrusion 122 is engaged with the locking protrusion 151, to the second position, in which the stopper protrusion 122 comes in contact with the other end of the guide groove 115b. Therefore, the range of rotation of the hinge housing 102 may be set to about 180 degrees.

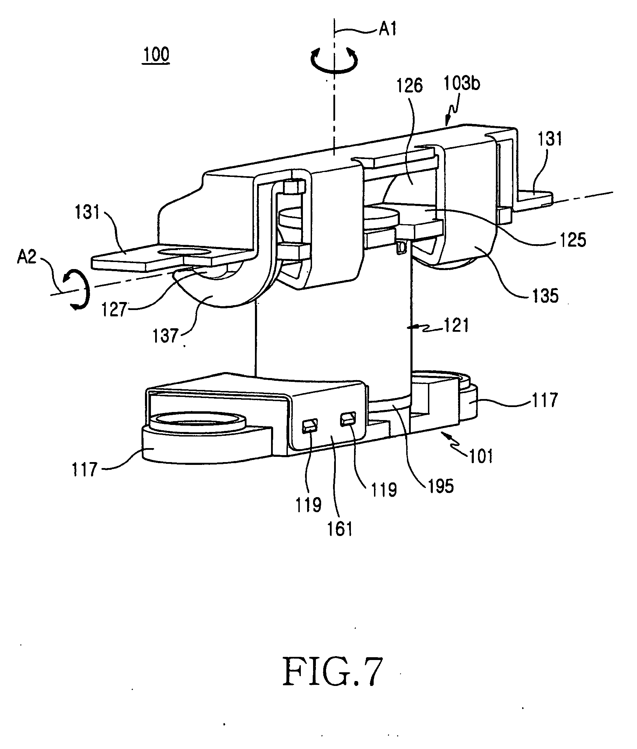

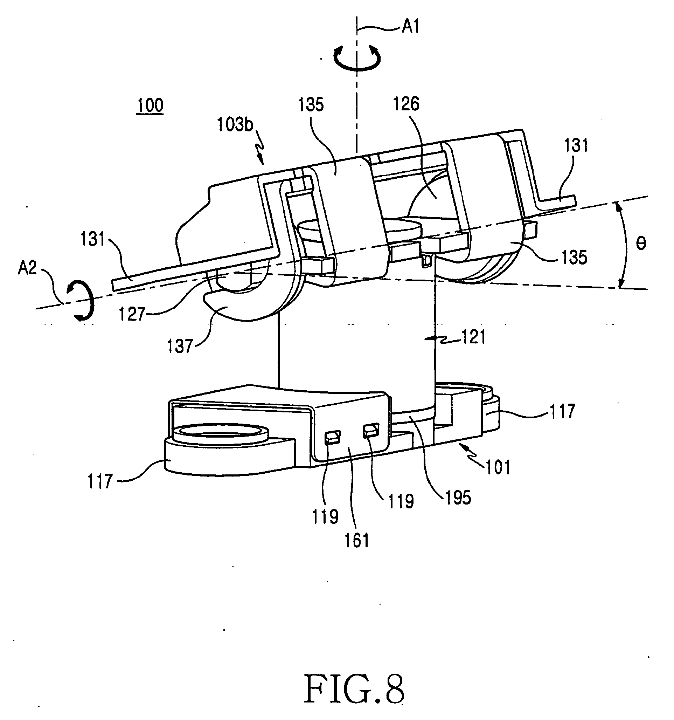

Referring to FIGS. 7 and 8, the bracket assembly 103 rotates about the second hinge axis A2 while the hinge housing 102 has completely rotated to the second position. When the bracket assembly completely rotates about the second axis A2, the curved end of the hook 135 comes into close contact with the supporting pieces 125. Thus, the rotation of the bracket assembly 103 is stopped. The range of rotation (*θ*) of the bracket assembly 103 is determined by the length of the hook 135 and the angle of curvature of its end as stated above. In this embodiment, the range of rotation is restricted to about 15 degrees so as to relieve strain on the user's eye and provide a comfortable viewing position while maintaining the structural stability of the terminal.

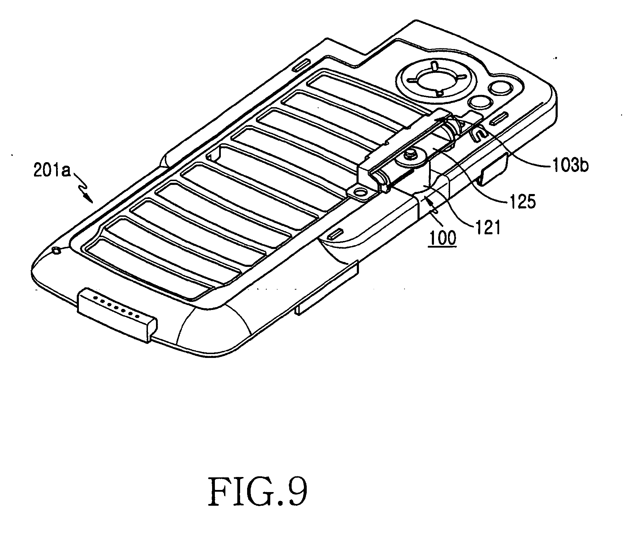

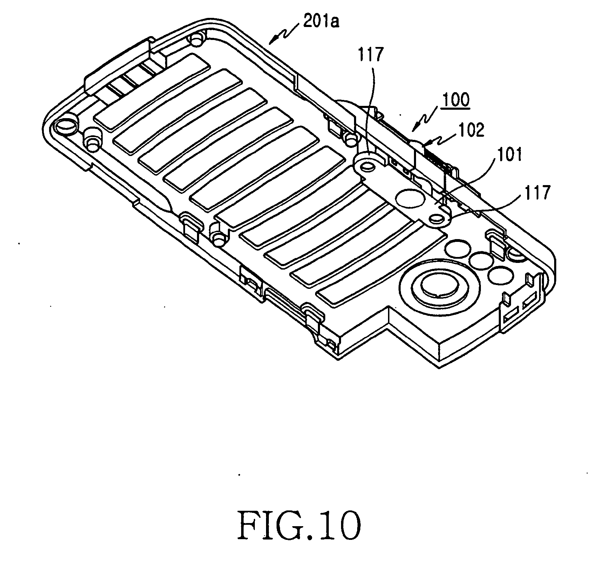

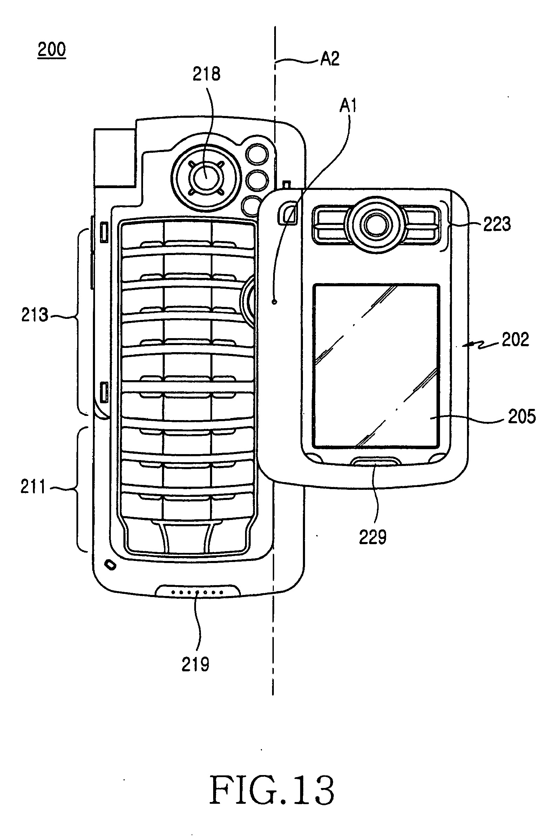

Hereinafter, constructions and operations of a portable terminal with the above-mentioned swing hinge apparatus 100 will be described with reference to FIGS. 9-13.

As shown in FIGS. 9-10, the swing hinge apparatus 100 is provided at one side edge of a portable terminal 200 and rotatably couples a first housing 201 and a second housing 202 of the portable terminal 200 to each other. The hinge base 101 is fastened to an inner side surface of a front case 201 a of the first housing 201, and the hinge housing is rotatably coupled to the hinge base 101. The hinge housing 102 protrudes beyond an upper surface of the first housing 201. Thus, the supporting pieces 125 and the bracket assembly 103 rotate in a position spaced from the upper surface of the first housing 201.

Although not shown, it is obvious that the bracket assembly 103, in particular, the second bracket 103b is fastened to the second housing 202 as the hinge base 101 is fastened to the inner side surface of the first housing 201.

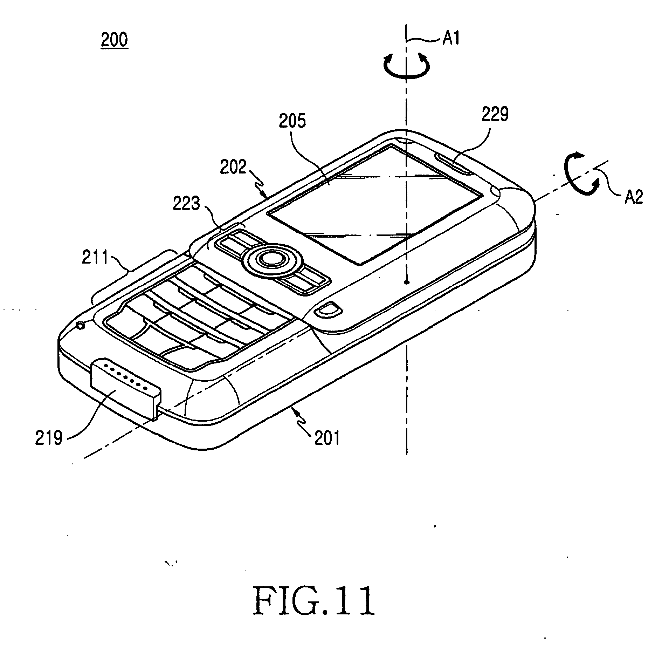

Referring to FIGS. 11-13, the portable terminal 200 comprises the first housing 201 and the second housing 202. The second housing 202 is rotatably coupled to the first housing 201 and faces the first housing 201.

The upper surface of the first housing 201 is provided with first and second keypads 211, 213, a transmitter module 219 with a built-in microphone, and a camera lens 218. The first keypad 211 is arranged to preferably always uncovered regardless of whether or not the second housing 202 rotates, and the second keypad 213 is covered or uncovered according to the position of the second housing 202. That is, the first and second keypads 211, 213 are arranged along a longitudinal direction of the first housing 201, and the second housing 202 exposes or covers only the second keypad 213 as it rotates on the first housing 201. The camera lens 218 is adjacent to the second keypad 213 and is provided at an upper end of the upper surface of the first housing 201.

The second housing 202 is rotatably coupled on one side to the first housing 201 by the swing hinge apparatus 100. An upper surface of the second housing 202 is provided with a display device 205, a third keypad 223 and a receiver module 229 with a built-in speakerphone.

As shown in FIG. 11, the first keypad 211 acts as ordinary character/digit input keys of the portable terminal in a state in which the second housing 202 overlaps with the first housing 201. In such a state, the third keypad 223 serves as function keys for menu calling, searching, selection or the like. That is, the portable terminal can be used like a conventional bar-type portable terminal in the state in which the second housing 202 overlaps with the first housing 201.

As also shown in FIG. 11, in the state in which the second housing 202 overlaps with the first housing 201, the hinge housing 102 is stopped and fixed in the first position by the stopper protrusion 122 and the locking protrusion 151 as shown in FIG. 4.

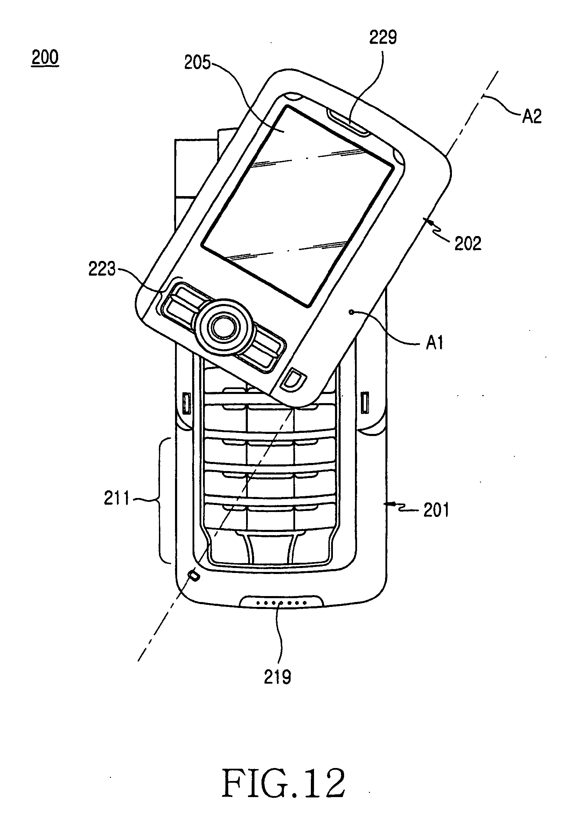

If the user rotates the second housing 202 as shown in FIG. 12, the stopper protrusion 122 pushes out the locking protrusion 151 and rotates to release the locking condition. Thus, the second housing 202 rotates together with the hinge housing 102 to a second position by the resilient force of the coil spring 108. This occurs once the resilient force of the locking protrusion 151 and compression spring 155 have been overcome even if the user rotates the second housing 202 only to a limited extent.

When the second housing 202 rotates to the second position, it is positioned side by side with the first housing 201. The second keypad 213 is exposed. The user can then operate the first and second keypads 211, 213 using his/her fingers in the uncovered state of the second keypad 213. Since it is possible to rotate the second housing 202 about second hinge axis A2 as shown in FIGs. 7 and 8, the user can rotate the second housing about axis A2 to tilt display device 205 in order to relieve eye strain and provide comfort. Thus, diverse functions such games, chatting or the like can be conveniently used in the state in which the second housing 202 is positioned side by side with the first housing 201.

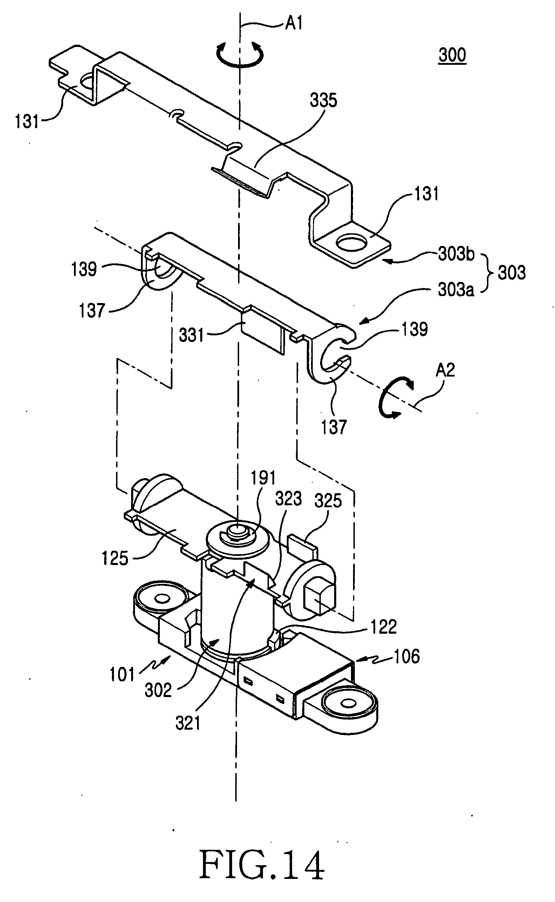

FIGS. 14-16 show a swing hinge apparatus 300 for a portable terminal in accordance with another embodiment of the present invention. The swing hinge apparatus 300 is essentially the same as the above-mentioned embodiment except for a construction of restricting the range of rotation (*θ*) of the bracket assembly 303. Thus, it is noted that the same components as those in the above-mentioned embodiment are provided with the same reference numerals, and the detailed description of such components may also be omitted for clarity and conciseness.

As shown in FIGS. 14-15, The swing hinge apparatus 300 includes an inclined protrusion 321 and a stopper plate 331 to restrict the range of rotation of the bracket assembly 303.

The inclined protrusion 321 extends from one surface of the supporting pieces 125 proximate the bracket assembly 303. One side surface of the inclined protrusion 321 is preferably constructed as a slope 323 inclined to the one surface of the supporting pieces 125 at a predetermined angle.

The stopper plate 331 extends from one surface of the bracket assembly 303, in particular, the first bracket 303a towards the direction of the supporting pieces 125. The stopper plate 331 is located opposite to the slope 323 of the inclined protrusion 321.

If the bracket assembly 303 is coupled to the supporting pieces 125 and rotates about the second hinge axis A2, the stopper plate 331 comes into contact with the slope 323 to restrict the range of rotation of the bracket assembly 303.

The range of rotation of the bracket assembly 303 may be diversely set depending on portable terminal products by adjusting an angle of inclination of the slope 323. In the bracket assembly 303 of the swing hinge apparatus 300 in accordance with this embodiment, the range of rotation of the bracket assembly 303 is preferably set to about 15 degrees so as to provide comfort to the user of the portable terminal while maintaining the structural integrity of the portable terminal.

The swing hinge apparatus 300 also includes a supporting protrusion 325 and a plate spring 335 for restricting free movement of the bracket assembly 303. Thus, the first bracket 303a faces the supporting pieces 125 in parallel and the first bracket 303a rotates at an angle of about 15 degrees.

The supporting protrusion 325 extends from one surface of the supporting pieces 125 in a direction toward the bracket assembly 303. The supporting protrusion 325 is located opposite to the slope 323 at a predetermined distance from the inclined protrusion 321. When the first bracket 303a faces the supporting pieces 125 in parallel, an upper end of the supporting pieces 125 comes into contact with the one surface of the first bracket 303a.

The plate spring 335 extends from the bracket assembly 303, in particular, the second bracket 303b and its end curves toward the an area proximate the supporting pieces 125. The end of the plate spring 335 contacts one side surface of the inclined protrusion 321, that is, the slope 323 when the first bracket 303a faces the supporting pieces 125 in parallel, and contacts with the other side surface of the inclined protrusion 321 when the first bracket 303a rotates at the angle of about 15 degrees.

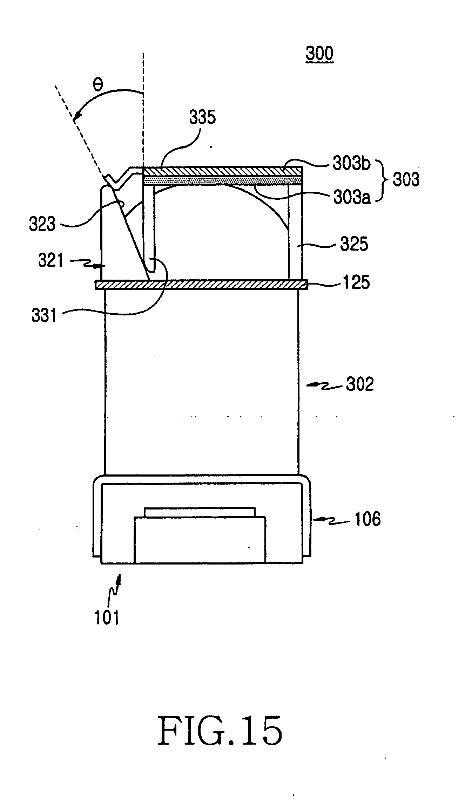

Referring to FIG. 15, when the first bracket 303a is located in parallel with the supporting pieces 125, the upper end of the supporting protrusion 325 contacts one surface of the first bracket 303, and clockwise rotation of the bracket assembly 303 is restricted. At this time, the end of the plate spring 335 contacts the upper end of the slope 323 to generate a resilient force to rotate the bracket assembly 303 clockwise. Thus, free movement of the bracket assembly 303 is restricted by the supporting protrusion 325 and the plate spring 335.

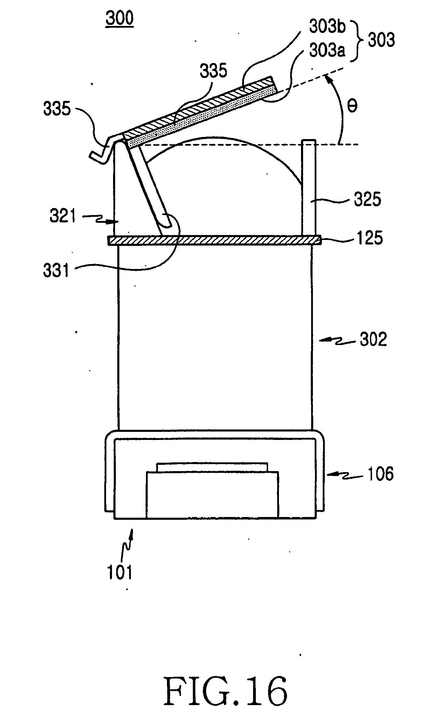

Referring to FIG. 16, the stopper plate 331 contacts the slope 323 in a state in which the bracket assembly 303 rotates at the angle of about 15 degrees. Thus, the bracket assembly is prevented from rotating counterclockwise. At this time, the end of the plate spring 335 comes in contact with an upper end of the other side surface of the inclined protrusion 321 to generate a resilient force to rotate the bracket assembly 303 counterclockwise. That is, the upper end of the inclined protrusion 321 is engaged between the stopper plate 331 and the plate spring 335. Consequently, the inclined protrusion 321, the stopper plate 331 and the plate spring 335 prevent the bracket assembly 303 from further rotating counterclockwise as well as from freely moving.

In conclusion, the swing hinge apparatus 300 in accordance with this preferred embodiment of the present invention can maintain the bracket assembly in a stable stopped state by the inclined protrusion 321, the stopper plate 331, the supporting protrusion 325 and the plate spring 335.

As stated above, with a swing hinge apparatus according to exemplary embodiments of the present invention, a terminal may be used as an ordinary bar-type terminal when the pair of opposite housings rotatably couple to each other for overlapping. The portable terminal may be used for games, chatting, and the like when the pair of housings are positioned side by side with each other, thereby providing diverse functions of the terminal. Also, since one housing can be located in an inclined position to the other housing when the pair of housings are positioned side by side with each other, the terminal improves comfort of the user. Moreover, the swing hinge apparatus is advantageous in that it minimizes the size of the terminal. Furthermore, the coil spring is used to provide a rotational force, and is convenient for use because semi automatic opening/closing operations of the terminal are realized.
While the invention has been shown and described with reference to certain embodiments thereof, it will be understood by those skilled in the art that various changes in form and details may be made therein without departing scope of the invention as defined by the appended claims.

## Claims

1. A swing hinge apparatus for a portable terminal, the apparatus comprising:
a hinge base (101);
a hinge housing (102) being coupled with the hinge base to rotate about a first hinge axis and being provided with a resilient force acting in one direction;
a bracket assembly (103) being coupled to the hinge housing to rotate about a second hinge axis which extends perpendicularly to the first hinge axis; and
a rotation stopper being disposed on the hinge base to restrict the rotation of the hinge housing in a first position, **characterized in that** there are provided:
a locker (105) as a rotation stopper for insertion into a locker-receiving portion (116) formed on the hinge base and within which the locker (105) moves horizontally;
at least one compression spring (155) which is supported at one end against one sidewall of the locker-receiving portion (116) and is supported at the other end against the locker (105) to provide a resilient force acting in one direction; and
a pair of supporting pieces (125) extending toward opposite directions from an outer circumferential surface of one end of a cylindrical body being part of the hinge housing, respectively, to support first (103 a) and second (103b) brackets of the a pair of supporting pieces (125) extending toward opposite directions from an outer circumferential surface of one end of a cylindrical body being part of the hinge housing, respectively, to support bracket assembly (103) , the supporting pieces and at least one of the first or second brackets engaging upon rotation of the brackets to limit the angle of rotation.

2. The swing hinge apparatus of claim 1, further comprising an inclined protrusion (321) which extends from one surface of the supporting pieces (125) in a direction towards the first bracket (303a) and being formed on one side surface with a slope inclined to contact the one surface of the supporting pieces at a predetermined angle; and a stopper plate (331) extending from one surface of the first bracket (303a) in a direction toward the supporting pieces and facing the slope of the inclined protrusion (321), wherein the stopper plate (321) comes in planar contact with the slope to restrict a range of rotation of the first bracket as the first bracket rotates.

3. The swing hinge apparatus of claim 2, further comprising a plate spring (335) which extends from one side of the bracket assembly (303) proximate an upper end of the inclined protrusion (321) and having an end of which curves toward the vicinity of the supporting pieces, wherein the end of the plate spring (335) comes in close contact with an upper end of the slope in a position where the first bracket (303a) is parallel with the supporting pieces (125), and comes in close contact with the other side surface of the inclined protrusion (321) in a position where the first bracket rotates and thus the stopper plate (321) comes in contact with the slope.

4. The swing hinge apparatus of claim 2 or 3, further comprising a supporting protrusion (325) which extends from the one surface of the supporting pieces (125) in a direction towards the first bracket (303a) while facing the inclined protrusion (321), wherein the supporting protrusion contacts with one surface of the first bracket to restrict free movement of the first bracket in a position where the first bracket is parallel with the supporting pieces.

5. The swing hinge apparatus of claim 1, further comprising a hook (135) which extends from the second bracket (103b) and an end of which is curved in one direction to surround the supporting pieces (125), thereby restricting a range of rotation of the bracket assembly (103).

6. The swing hinge apparatus of one of the claim 1 to 5, further comprising rotating protrusions (127) being formed at ends of the supporting pieces (125), respectively; and rotating ribs (137) being curved and extending from both ends of the first bracket (103a), respectively, and being formed with rotating holes (139) to rotatably couple to the rotating protrusions.

7. The swing hinge apparatus of one of the claims 2 to 6, wherein the range of rotation of the bracket assembly is restricted within about 15 degrees.

8. The swing hinge apparatus of one of the claims 1 to 7, further comprising a locking protrusion (151) being formed at one end of the locker (105) to move in and out of one side of the locker-receiving portion (116).

9. The swing hinge apparatus of claim 1 to 8, wherein the locker (105) is provided on one surface with at least a receiving groove (153) for receiving the at least one compression spring (155).

10. The swing hinge apparatus of one of the claims 1 to 9, further comprising a cover (106) which is coupled to an upper end of the locker-receiving portion (116) to close the locker-receiving portion.

11. The swing hinge apparatus of one of the claims 1 to 10, further comprising a hinge shaft (104) which extends from one surface of the hinge base (101), and through the hinge base and the hinge housing (102) , the hinge shaft having an end (143) which protrudes from one end surface of the hinge housing to engage an E-ring on an outer circumferential surface.

12. The swing hinge apparatus of claim 11, further comprising a washer (193) being interposed between the one end surface of the hinge housing and the E-ring.

13. The swing hinge apparatus of one of the claims 1 to 12, further comprising a bushing (107) which is received within the hinge housing and is fixed on the hinge base adapted to receive lubricant material injected within the hinge housing (102).

14. The swing hinge apparatus of claim 13, wherein the lubricant material injected within the hinge housing is grease.

15. The swing hinge apparatus of one of the claims 1 to 14, further comprising at least two supporting protrusions (111, 113) being formed on one surface of the hinge base (101); and supporting grooves (115) being formed at one end of the bushing to engage with the supporting protrusions.

16. The swing hinge apparatus of one of the claims claim 1 to 15, further comprising a coil spring (108) being supported at one end on the hinge base (101) and being supported at the other end against an inner wall of the hinge housing (102) to provide a resilient force to rotate the hinge housing in one direction.

17. The swing hinge apparatus of one of the claims 1 to 16, further comprising a stopper protrusion (122) being formed on an outer circumferential surface of the hinge housing (102); and a guide groove (115b) being formed on the hinge base (101) along a path of movement of the stopper protrusion, which is formed according to the rotation of the hinge housing, wherein a range of rotation of the hinge housing is restricted by the stopper protrusion and the guide groove.

18. The swing hinge apparatus of one of the claims 1 to 17, wherein the range of rotation of the hinge housing is restricted within about 180 degrees.

19. The swing hinge apparatus as claimed in claim 17, wherein the locker (105) is engaged with the stopper protrusion of the hinge housing in the first position.

20. The swing hinge apparatus as claimed in one of the claims 1 to 19, further comprising at least one fastening piece (117) which extends outwardly from an outer circumferential surface of the hinge base (101) and is formed with a fastening hole (118) extending in a direction of the first hinge axis.

21. The swing hinge apparatus of one of the claims 1 to20, further comprising a washer (195) being interposed between the hinge base and the other end of the hinge housing (102) to relieve friction and abrasion generated by the rotation of the hinge housing.

## Patentansprüche

1. Schwingschamiervorrichtung für ein tragbares Endgerät, wobei die Vorrichtung aufweist:
eine Scharnierbasis (101);
ein Scharniergehäuse (102), das mit der Scharnierbasis gekoppelt ist, zum Rotieren um eine erste Scharnierachse und mit einer Federkraft, die in eine Richtung arbeitet, bereitgestellt ist;
eine Klammeranordnung (103), die mit dem Scharniergehäuse gekoppelt ist, zum Rotieren um eine zweite Scharnierachse, welche sich senkrecht zu der ersten Scharnierachse erstreckt; und
ein Rotationsstopper, der auf der Scharnierbasis angeordnet ist, um die Rotation des Scharniergehäuses in einer ersten Position zu begrenzen, **dadurch gekennzeichnet, dass** bereitgestellt ist:
eine Schließanordnung (105) als ein Rotationsstopper zum Einfügen in ein die Schließanordnung aufnehmendes Teil (116), das auf der Scharnierbasis ausgebildet ist und in welchem die Schließanordnung (105) sich horizontal bewegt;
mindestens eine Druckfeder (155), welche an einem Ende gegen eine Seitenwand des die Schließanordnung aufnehmenden Teils (116) gestützt ist und an dem anderen Ende gegen die Schließanordnung (105) gestützt ist, um eine Federkraft bereitzustellen, die in eine Richtung arbeitet; und
ein Paar von Stützstücken (125), die zu den gegenüberliegenden Richtungen von einer äußeren Umfangsoberfläche auf einem Ende eines zylindrischen Körpers verlängert sind, der Teil des Scharniergehäuses ist, um erste (103a) bzw. zweite (103b) Klammern der Klammeranordnung (103) zu unterstützen, wobei die Stützstücke und mindestens eine von den ersten oder zweiten Klammern nach Rotation der Klammern einrasten, um den Rotationswinkel zu begrenzen.

2. Schwingschamiervorrichtung nach Anspruch 1, weiterhin aufweisend:
einen geneigten Vorsprung (321), welcher sich von einer Oberfläche der Stützstücke (125) in eine Richtung zu der ersten Klammer (303a) erstreckt und auf einer Seitenoberfläche mit einer Schräge ausgebildet ist, die geneigt ist, um die eine Oberfläche der Stützstücke in einem vorbestimmten Winkel zu kontaktieren; und ein Stoppblatt (331), das sich von einer Oberfläche der ersten Klammer (303a) in eine Richtung zu den Stützstücken erstreckt und gegenüber der Schräge des geneigten Vorsprungs (321) steht, wobei das Stoppblatt (331) in einen Flächenkontakt mit der Schräge kommt, um einen Rotationsbereich der ersten Klammer zu begrenzen, wenn die erste Klammer rotiert.

3. Schwingscharniervorrichtung nach Anspruch 2, weiterhin aufweisend eine Tellerfeder (335), welche sich von einer Seite der Klammeranordnung (303), eines in der Nähe eines oberen Endes des geneigten Vorsprungs (321) erstreckt und ein Ende aufweist, welches in die Nähe der Stützstücke eine Kurve beschreibt, wobei das Ende der Tellerfeder (335) in engen Kontakt mit einem oberen Ende der Schräge in einer Position kommt, wo die erste Klammer (303a) parallel zu den Stützstücken (125) ist, und in engen Kontakt mit der anderen Seitenoberfläche des geneigten Vorsprungs (321) in einer Position kommt, in der die erste Klammer rotiert und somit das Stoppblatt (331) in Kontakt mit der Schräge kommt.

4. Schwingschamiervorrichtung nach Anspruch 2 oder 3, weiterhin aufweisend einen Stützvorsprung (325), welcher sich von der einen Oberfläche der Stützstücke (125) in eine Richtung zu der ersten Klammer (303a) erstreckt, während er gegenüber des geneigten Vorsprungs (321) steht, wobei der Stützvorsprung mit einer Oberfläche der ersten Klammer kontaktiert, um eine freie Bewegung der ersten Klammer in einer Position, in der die erste Klammer parallel mit den Stützstücken ist, zu begrenzen.

5. Schwingscharniervorrichtung nach Anspruch 1, weiterhin aufweisend einen Haken (135), welcher sich von der zweiten Klammer (103b) erstreckt und ein Ende davon ist in eine Richtung gebogen, um die Stützstücke (125) zu umfassen, wodurch ein Rotationsbereich der Klammeranordnung (103) begrenzt wird.

6. Schwingschamiervorrichtung nach einem der Ansprüche 1 bis 5, weiterhin aufweisend Rotationsvorsprünge (127), die jeweils an Enden der Stützstücke (125) ausgebildet sind; und gekrümmte Rotationsrippen (137), die sich von beiden Enden der ersten Klammer (103a) erstrecken und die mit Rotationsöffnungen (139) ausgebildet sind, um rotierbar mit den Rotationsvorsprüngen zu koppeln.

7. Schwingscharniervorrichtung nach einem der Ansprüche 2 bis 6, wobei der Rotationsbereich der Klammeranordnung innerhalb von ungefähr 15 Grad begrenzt ist.

8. Schwingscharniervorrichtung nach einem der Ansprüche 1 bis 7, weiterhin aufweisend einen Schließanordnungsvorsprung (151), der an einem Ende der Schließanordnung (105) ausgebildet ist, um sich in und aus einer Seite des die Schließanordnung aufnehmenden Teils (116) zu bewegen.

9. Schwingscharniervorrichtung nach Anspruch 1 bis 8, wobei die Schließanordnung (105) auf einer Oberfläche mit mindestens einer aufnehmenden Nut (153) bereitgestellt ist, zum Aufnehmen der mindestens einen Druckfeder (155).

10. Schwingschamiervorrichtung nach einem der Ansprüche 1 bis 9, weiterhin aufweisend einen Deckel (106), welcher an ein oberes Ende des die Schließanordnung aufnehmenden Teils (116) gekoppelt ist, um den die Schließanordnung aufnehmenden Teil zu schließen.

11. Schwingschamiervorrichtung nach einem der Ansprüche 1 bis 10, weiterhin aufweisend einen Scharnierbolzen (104), welcher sich von einer Oberfläche der Scharnierbasis (101) und durch die Scharnierbasis und das Scharniergehäuse (102) erstreckt, wobei der Scharnierbolzen ein Ende (143) aufweist, welches von einem Ende der Oberfläche des Scharniergehäuses vorspringt, um in einen E-Ring an einer äußeren Umfangsoberfläche einzurasten.

12. Schwingschamiervorrichtung nach Anspruch 11, weiterhin aufweisend eine Unterlegscheibe (193), die zwischen dem einen Ende der Oberfläche des Scharniergehäuses und dem E-Ring eingeschoben ist.

13. Schwingscharniervorrichtung nach einem der Ansprüche 1 bis 12, weiterhin aufweisend eine Buchse (107), welche innerhalb des Scharniergehäuses aufgenommen ist und auf der Scharnierbasis befestigt ist, die eingerichtet ist, um das in das Scharniergehäuse (102) einzuspritzende Schmiermaterial aufzunehmen.

14. Schwingschamiervorrichtung nach Anspruch 13, wobei das in das Scharniergehäuse einzuspritzende Schmiermaterial Schmierfett ist.

15. Schwingschamiervorrichtung nach einem der Ansprüche 1 bis 14, weiterhin aufweisend mindestens zwei Stützvorsprünge (111, 113), die auf einer Oberfläche der Scharnierbasis (101) ausgebildet sind; und Stütznuten (115), die an einem Ende der Buchse ausgebildet sind, um in den Stützvorsprüngen einzugreifen.

16. Schwingschamiervorrichtung nach einem der Ansprüche 1 bis 15, weiterhin aufweisend eine Schraubenfeder (108), die auf einem Ende der Scharnierbasis (101) gestützt ist, und die auf dem anderen Ende gegen eine innere Wand des Scharniergehäuses (102) gestützt ist, um eine Federkraft bereitzustellen, um das Scharniergehäuse in eine Richtung zu rotieren.

17. Schwingscharniervorrichtung nach einem der Ansprüche 1 bis 16, weiterhin aufweisend einen Stoppervorsprung (122), der auf einer äußeren Umfangsoberfläche des Scharniergehäuses (102) ausgebildet ist; und eine Führungsnut (115b), die auf der Scharnierbasis (101) entlang eines Bewegungsweges des Stoppervorsprungs ausgebildet ist, welcher gemäß der Rotation des Scharniergehäuses ausgebildet ist, wobei ein Rotationsbereich des Scharniergehäuses durch den Stoppervorsprung und die Führungsnut begrenzt ist.

18. Schwingschamiervorrichtung nach einem der Ansprüche 1 bis 17, wobei der Rotationsbereich des Scharniergehäuses innerhalb von ungefähr 180 Grad begrenzt ist.

19. Schwingschamiervorrichtung nach Anspruch 17, wobei die Schließanordnung (105) mit dem Stoppervorsprung des Scharniergehäuses in der ersten Position eingegriffen wird.

20. Schwingscharniervorrichtung nach einem der Ansprüche 1 bis 19, weiterhin aufweisend, mindestens ein Befestigungsstück (117), welches sich auswärts von einer äußeren Umfangsoberfläche der Scharnierbasis (101) erstreckt und mit einer Befestigungsöffnung (118), die sich in einer Richtung der ersten Scharnierachse erstreckt, ausgebildet ist.

21. Schwingscharniervorrichtung nach einem der Ansprüche 1 bis 20, weiterhin aufweisend eine Unterlegscheibe (195), die zwischen der Scharnierbasis und dem anderen Ende des Scharniergehäuses (102) eingeschoben ist, um Reibung und Abrieb, die durch die Rotation des Scharniergehäuses erzeugt werden, zu lindern.

## Revendications

1. Appareil à charnière de pivotement pour un terminal portable, l'appareil comportant :
une base (101) de charnière ;
un boîtier (102) de charnière accouplé à la base de charnière afin de tourner autour d'un premier axe de charnière et pourvu d'une force élastique agissant dans une direction ;
un ensemble à supports (103) accouplé au boîtier de charnière pour tourner autour d'un second axe de charnière qui s'étend perpendiculairement au premier axe de charnière ; et
une butée de rotation disposée sur la base de la charnière pour limiter la rotation du boîtier de charnière dans une première position, **caractérisé en ce qu'**il est prévu:
un verrou (105) en tant que butée de rotation pour une insertion dans une partie (116) de réception de verrou formée sur la base de charnière et à l'intérieur de laquelle le verrou (105) se déplace horizontalement ;
au moins un ressort (155) de compression qui est supporté par une extrémité contre une paroi latérale de la partie (116) de réception de verrou et qui est supporté par l'autre extrémité contre le verrou (105) pour produire une force élastique agissant dans une direction ; et
une paire de pièces (125) de support s'étendant dans des directions opposées depuis une surface circonférentielle extérieure d'une extrémité d'un corps cylindrique faisant partie du boîtier de charnière, respectivement, pour supporter des premier (103a) et second (103b) supports de l'ensemble à supports (103), les pièces de support et au moins l'un des premier et second supports entrant en prise lors d'une rotation des supports pour limiter l'angle de rotation.

2. Appareil à charnière de pivotement selon la revendication 1, comportant en outre une saillie inclinée (321) qui s'étend depuis une surface des pièces de support (125) en direction du premier support (303a) et qui est formée sur une surface latérale avec une pente inclinée pour entrer en contact avec ladite surface des pièces de support sous un angle prédéterminé ; et une plaque (331) de butée s'étendant depuis une surface du premier support (303a) en direction des pièces de support et faisant face à la pente de la saillie inclinée (321), la plaque de butée (331) venant en contact à plat avec la pente pour limiter une plage de rotation du premier support lorsque le premier support tourne.

3. Appareil à charnière de pivotement selon la revendication 2, comportant en outre un ressort plat (335) qui s'étend depuis un premier côté de l'ensemble à supports (303) à proximité d'une extrémité supérieure de la saillie inclinée (321) et ayant une extrémité qui est courbée vers le voisinage des pièces de support, dans lequel l'extrémité du ressort plat (335) vient en contact étroit avec une extrémité supérieure de la pente dans une position où le premier support (303a) est parallèle aux pièces de support (125), et vient en contact étroit avec l'autre surface latérale de la saillie inclinée (321) dans une position où le premier support tourne et la plaque de butée (331) vient ainsi en contact avec la pente.

4. Appareil à charnière de pivotement selon la revendication 2 ou 3, comportant en outre une saillie (325) de support qui s'étend depuis ladite surface des pièces (125) de support en direction du premier support (303a) tout en faisant face à la saillie inclinée (321), la saillie de support entrant en contact avec une surface du premier support pour limiter un mouvement libre du premier support dans une position où le premier support est parallèle aux pièces de support.

5. Appareil à charnière de pivotement selon la revendication 1, comportant en outre un crochet (135) qui s'étend depuis le second support (103b) et dont une extrémité est courbée dans une direction telle qu'il entoure les pièces de support (125), limitant ainsi une plage de rotation de l'ensemble à supports (103).

6. Appareil à charnière de pivotement selon l'une des revendications 1 à 5, comportant en outre des saillies tournantes (127) formées à des extrémités des pièces de support (125), respectivement ; et des nervures tournantes (137) qui sont courbées et s'étendent depuis les deux extrémités du premier support (103a), respectivement, et sont formées avec des trous (139) de rotation destinés à réaliser un accouplement de rotation avec les saillies tournantes.

7. Appareil à charnière de pivotement selon l'une des revendications 2 à 6, dans lequel la plage de rotation de l'ensemble à supports est limitée à environ 15 degrés.

8. Appareil à charnière de pivotement selon l'une des revendications 1 à 7, comportant en outre une saillie de verrouillage (151) formée à une extrémité du verrou (105) pour se déplacer vers l'intérieur et l'extérieur d'un côté de la partie (116) de réception de verrou.

9. Appareil à charnière de pivotement selon les revendications 1 à 8, dans lequel une surface du verrou (105) est pourvue d'au moins une gorge de réception (153) destinée à recevoir le, au moins un, ressort de compression (155).

10. Appareil à charnière de pivotement selon l'une des revendications 1 à 9, comportant en outre un capot (106) qui est accouplé à une extrémité supérieure de la partie (116) de réception de verrou pour fermer la partie de réception de verrou.

11. Appareil à charnière de pivotement selon l'une des revendications 1 à 10, comportant en outre une broche (104) de charnière qui s'étend depuis une surface de la base (101) de la charnière, et à travers la base de la charnière et le boîtier (102) de la charnière, la broche de charnière ayant une extrémité (143) qui fait saillie d'une surface extrême du boîtier de charnière pour entrer en engagement avec un anneau en E sur une surface circonférentielle extérieure.

12. Appareil à charnière de pivotement selon la revendication 11, comportant en outre une rondelle (193) interposée entre ladite surface extrême du boîtier de la charnière et l'anneau en E.

13. Appareil à charnière de pivotement selon l'une des revendications 1 à 12, comportant en outre une douille (107) qui est reçue dans le boîtier de la charnière et est fixée sur la base de la charnière conçue pour recevoir une matière lubrifiante injectée dans le boîtier (102) de charnière.

14. Appareil à charnière de pivotement selon la revendication 13, dans lequel la matière lubrifiante injectée dans le boîtier de charnière est de la graisse.

15. Appareil à charnière de pivotement selon l'une des revendications 1 à 14, comportant en outre au moins deux saillies de support (111, 113) formées sur une surface de la base (101) de la charnière ; et des gorges (115) de support formées à une extrémité de la douille pour entrer en engagement avec les saillies de support.

16. Appareil à charnière de pivotement selon l'une des revendications 1 à 15, comportant en outre un ressort hélicoïdal (108) supporté par une extrémité sur la base (101) de la charnière et supporté par l'autre extrémité contre une paroi intérieure du boîtier (102) de la charnière afin de produire une force élastique pour faire tourner le boîtier de la charnière dans une direction.

17. Appareil à charnière de pivotement selon l'une des revendications 1 à 16, comportant en outre une saillie (122) de butée formée sur une surface circonférentielle extérieure du boîtier (102) de charnière ; et une gorge de guidage (115b) formée sur la base (101) de charnière le long d'un trajet de mouvement de la saillie de butée, qui est formée conformément à la rotation du boîtier de la charnière, une plage de rotation du boîtier de charnière étant limitée par la saillie de butée et la gorge de guidage.

18. Appareil à charnière de pivotement selon l'une des revendications 1 à 17, dans lequel la plage de rotation du boîtier de charnière est limitée à environ 180 degrés.

19. Appareil à charnière de pivotement selon la revendication 17, dans lequel le verrou (105) entre en engagement avec la saillie de butée du boîtier de charnière dans la première position.

20. Appareil à charnière de pivotement selon l'une des revendications 1 à 19, comportant en outre au moins une pièce de fixation (117) qui s'étend vers l'extérieur depuis une surface circonférentielle extérieure de la base (101) de la charnière et est formée de façon à présenter un trou (118) de fixation s'étendant dans une direction du premier axe de la charnière.

21. Appareil à charnière de pivotement selon l'une des revendications 1 à 20, comportant en outre une rondelle (195) interposée entre la base de la charnière et l'autre extrémité du boîtier (102) de la charnière pour supprimer le frottement et l'abrasion générés par la rotation du boîtier de la charnière.
